# FASCICULE DE BREVET EUROPEEN

(11) **EP 0 684 120 B1**
(45) Date de publication et mention de la délivrance du brevet: **14.08.2002**
(21) Numéro de dépôt: 95401196.1
(22) Date de dépôt: 23.05.1995
(51) Int. Cl.: B29C 45/16, B29C 45/14, B60R 13/02

(54) **Procédé d'inclusion d'un décor, notamment textile, dans une pièce en matière plastique**
Verfahren zur Einbettung eines Dekors, insbesondere Textil, in einem Kunststoffteil
Method for including a decoration, in particular textile, in a plastic part

(30) Priorité: 26.05.1994 FR 9406382; 07.02.1995 FR 9501383
(43) Date de publication de la demande: 29.11.1995
(73) Titulaire: CENTRE D'ETUDES ET RECHERCHE POUR L'AUTOMOBILE ( CERA), F-51100 Reims (FR)
(72) Inventeur: Noirot, Daniel, F-02350 Liesse (FR); Vitrant, Olivier, F-51110 Warmerville (FR)
(74) Mandataire: Geismar, Thierry

(56) Documents cités:
- EP-A- 0 482 270
- EP-A- 0 636 464
- FR-A- 2 601 618
- GB-A- 2 271 956
- PATENT ABSTRACTS OF JAPAN vol. 12 no. 257 (M-719) [3104] ,20 Juillet 1988 & JP-A-63 041116 (MEIWA SANGYO)

## Description

La présente invention concerne un procédé d'inclusion d'un décor en feuille, notamment en matériau textile, en médaillon à la surface d'une pièce en matière plastique, ainsi qu'un moule destiné à la mise en oeuvre de ce procédé et une pièce obtenue par ce procédé.

Bien entendu, plusieurs médaillons peuvent être inclus par le présent procédé, soit simultanément soit successivement, dans la même pièce qui, elle-même, peut être composée d'une seule ou de plusieurs parties.

De telles pièces sont par exemple connues dans le domaine de l'industrie automobile. Ainsi, certaines garnitures de porte présentent à la vue, c'est-à-dire de l'intérieur du véhicule, l'aspect d'une pièce en matière plastique comportant en insert à sa surface, ou, autrement dit, en médaillon, un décor en feuille, par exemple en tissu au niveau de l'accoudoir. De la matière plastique sert également de support au décor en feuille, c'est-à-dire forme le volume de l'accoudoir proprement dit, et n'est donc pas directement visible. Un autre insert peut former le bas de la porte.

Généralement, la partie périphérique en matière plastique, sans décor autre que son propre état de surface, et le médaillon, constitué du décor en feuille et de sa matière plastique de support, sont réalisés séparément puis assemblés soit directement soit en différé, par exemple au moyen d'agrafes. Le médaillon lui-même est obtenu en surmoulant le décor avec sa matière plastique de support.

De tels procédés comportent de nombreuses opérations ainsi que de nombreuses reprises entre les différentes opérations, ce qui présente un certain nombre d'inconvénients.

On a également proposé, dans le document GB-A-2271956, un procédé d'inclusion d'un décor en feuille, notamment textile, en médaillon à la surface d'une pièce en matière plastique, comprenant les étapes consistant:
- à utiliser un moule en au moins deux parties dont une partie au moins est constituée d'au moins deux éléments, au moins un élément correspondant au médaillon et au moins un autre élément correspondant à la périphérie de la pièce, autour du médaillon;
- à amener la feuille de décor sur l'élément correspondant au médaillon et à fermer le moule;
- à isoler, dans la cavité du moule, le volume situé sous la feuille de décor du volume périphérique, en utilisant un moule dont la partie comprenant lesdits éléments comprend au moins un troisième élément, annulaire et entourant l'élément correspondant au médaillon, et susceptible de venir s'appliquer sur l'autre partie du moule ;
- à injecter de la matière plastique successivement dans les volumes ainsi isolés; et
- à éjecter la pièce obtenue.

Ce procédé présente l'inconvénient que les différentes parties de la pièce sont simplement juxtaposées, le décor étant uniquement collé sur l'une de ces parties. Ainsi, d'une part la liaison entre ces parties est peu résistante, et, d'autre part, le décor est fixé à la pièce de façon peu solide.

La présente invention vise à pallier ces inconvénients. Plus particulièrement, l'invention a pour but de fournir des moyens permettant en un minimum d'opérations d'inclure à la surface d'une pièce en matière plastique une ou plusieurs feuilles de décor, par exemple en matériau textile, préconformées ou non, les différentes parties de la pièce étant solidement reliées entre elles, de même que le décor est solidement fixé à la pièce.

A cet effet, l'invention a tout d'abord pour objet un procédé selon la revendication 1.

Ainsi, la lisière de la feuille de décor traverse la pièce finie, passant d'un de ses côtés à l'autre à la jonction entre la matière plastique du médaillon et celle de la périphérie. Elle assure donc un lien d'adhérence entre la partie de la pièce sur laquelle elle est posée et la partie périphérique. Elle est par ailleurs elle-même fermement maintenue du fait de son pincement.

Bien entendu, lorsqu'il sera, dans la présente description, question de partie fixe ou mobile, ces termes sont relatifs et l'une ou l'autre des parties peut être considérée comme fixe et l'autre comme mobile.

Dans un mode de mise en oeuvre particulier, on injecte la matière plastique en premier lieu dans le volume situé sous la feuille de décor.

C'est en pratique la solution que l'on adoptera de préférence dans le cas d'une feuille de décor en matière textile ou, plus généralement, en matériau non imperméable à la matière plastique injectée. On pourra alors adopter une pression d'injection plus élevée dans le volume périphérique que dans le volume central correspondant au médaillon, ce qui permet d'obtenir un accrochage satisfaisant de la matière plastique à la feuille de décor sans risque de traverser cette dernière.

L'invention a également pour objet un moule selon la revendication 3.

Bien évidemment, ce qui a été énoncé précédemment au sujet du caractère relatif des parties fixes et mobiles du moule reste ici valable.

Dans un mode de réalisation particulier, ladite première partie du moule comprend au moins un troisième élément, annulaire et entourant l'élément correspondant au médaillon, et susceptible de venir s'appliquer sur la deuxième partie du moule pour isoler ledit premier volume d'injection dudit deuxième volume d'injection.

Plus particulièrement, ledit troisième élément peut être agencé pour coulisser entre l'élément correspondant au médaillon et l'élément correspondant à la partie périphérique du moule.

Ce troisième élément, qui forme donc une lunette périphérique au médaillon, permet de délimiter et d'isoler pour l'injection le volume correspondant à ce dernier du volume périphérique. Dans le cas où il est réalisé coulissant, la surface extérieure de la pièce peut être lisse; dans le cas contraire, cette surface forme une rainure autour du médaillon.

Afin d'optimiser l'accrochage du médaillon à la périphérie de la pièce en matière plastique, le moule comporte avantageusement des encoches espacées formées dans la zone où les deux volumes d'injection sont en vis-à-vis de part et d'autre de la feuille de décor.

De façon typique, la distance entre lesdites encoches est inférieure à environ 1 mm pour un décor en feuille en film plastique, comprise environ entre 1 et 3 mm pour un décor en feuille en textile à structure serrée, par exemple en maille, et comprise environ entre 3 et 5 mm pour un décor en feuille à structure lâche, par exemple en chaîne et trame.

La profondeur des encoches peut être comprise entre 1 et 5 mm, et par exemple être de l'ordre de la distance entre encoches.

La présente invention a également pour objet une pièce en matière plastique selon la revendication 8 ou 9.

L'unité de la pièce est donc réalisée soit à travers la feuille de décor soit par son intermédiaire. Le premier cas est celui où cette feuille est susceptible d'être pénétrée par la matière plastique injectée, par exemple lorsqu'elle est en matériau textile. Le deuxième cas est celui où la feuille de décor est imperméable à la matière plastique injectée, l'unité est alors obtenue par adhérence sur cette feuille de la matière injectée de ses deux côtés.

On décrira maintenant, à titre d'exemple non limitatif, un mode de réalisation particulier de l'invention, en référence aux dessins schématiques annexés dans lesquels:
- les figures 1 à 7 sont des vues de dessus en coupe d'un moule selon l'invention, illustrant les différentes étapes de son utilisation dans le cadre de la fabrication d'un panneau de portière de véhicule automobile;
- la figure 8 est une vue à plus grande échelle d'un détail de la figure 3; et
- la figure 9 est une vue similaire à la figure 8 d'un autre mode de réalisation.

Le moule représenté sur les figures comprend une plaque fixe 1 de fond de moule comportant notamment les vérins obturateurs.

On adjoint ici au moule un système de type connu d'injection multi-points en cascade. Dans un tel système, on multiplie les points d'injection et on pilote de manière convenable leur ouverture et fermeture respectives. La matière plastique est distribuée par un ensemble de canaux chauds, supportés par une plaque de support 2 montée sur la plaque de fond de moule 1.

La plaque de support 2 reçoit également une empreinte fixe 3 de médaillon destinée à conformer l'envers de la matière plastique de support de la feuille de décor.

La partie mobile du moule comprend tout d'abord une plaque mobile 4 de fond de moule portant l'empreinte mobile 5 de médaillon ainsi que la partie 6 de l'empreinte périphérique, destinée à conformer l'endroit de la partie périphérique du panneau. C'est donc cette partie 6 du moule qui donne son aspect fini à la partie en matière plastique du panneau.

L'envers de cette partie en matière plastique est conformé à l'aide d'une empreinte intermédiaire 7 dont une partie est, dans le cas présent, constituée d'un noyau 8. L'empreinte intermédiaire 7 porte le dispositif d'éjection 9 actionnant les éjecteurs 10. Le noyau 8 constitue lui-même, ici, un éjecteur et est donc également entraîné par le dispositif 9.

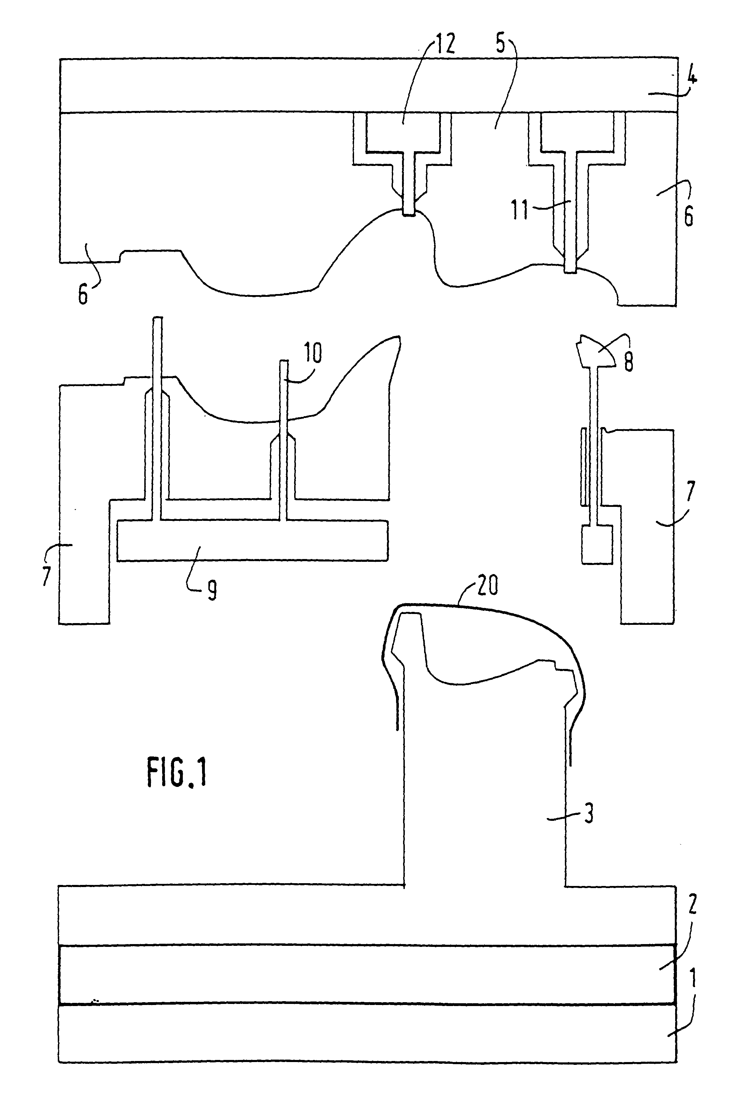

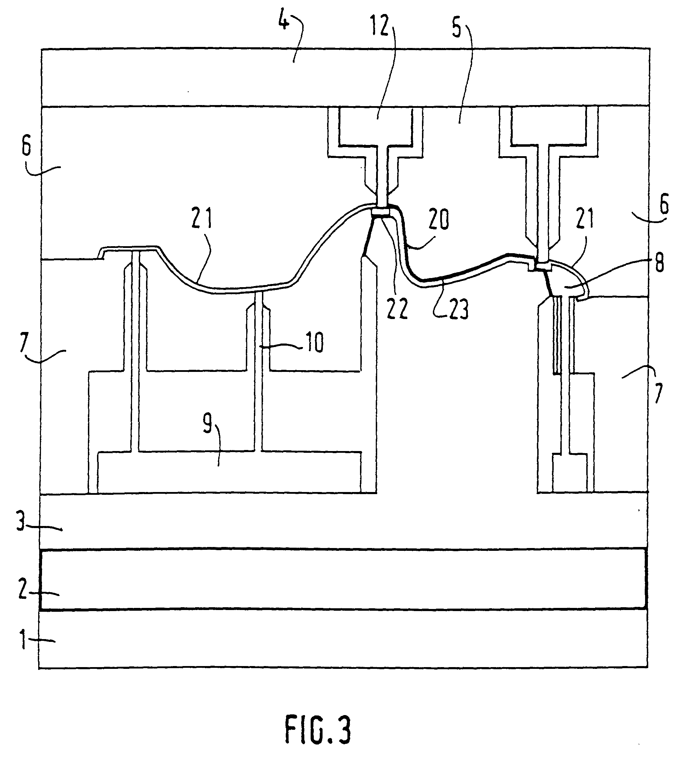

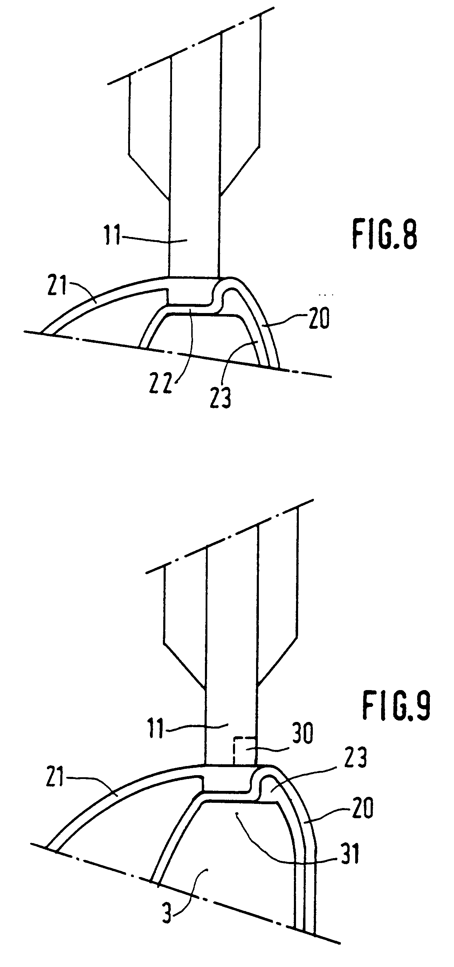

Une lunette 11 de médaillon est constituée d'un élément tubulaire dont la section droite correspond à la projection du pourtour du médaillon parallèlement aux génératrices du tube. La lunette est agencée pour coulisser entre les empreintes 5 et 6. Des moyens d'actionnement 12 sont prévus à cet effet, permettant de déplacer la lunette d'une position sortie, représentée par exemple à la figure 1, où son bord libre dépasse des empreintes 5 et 6, à une position rentrée, représentée par exemple aux figures 3 et 8.

Le moulage d'un panneau de portière s'effectue de la manière suivante. L'homme de métier saura comment monter les différents éléments constitutifs du moule sur la presse à injecter pour obtenir les mouvements décrits ci-après.

Le moule est tout d'abord ouvert dans la position de la figure 1. L'empreinte 7 est en position intermédiaire entre la partie fixe du moule et la partie du moule solidaire de la plaque mobile 4 de fond de moule. Les éjecteurs sont sortis, ayant été utilisés à la fin du cycle précédent. La lunette 11 est en position rentrée. La feuille de décor 20 est mise en place sur l'empreinte 3 de médaillon.

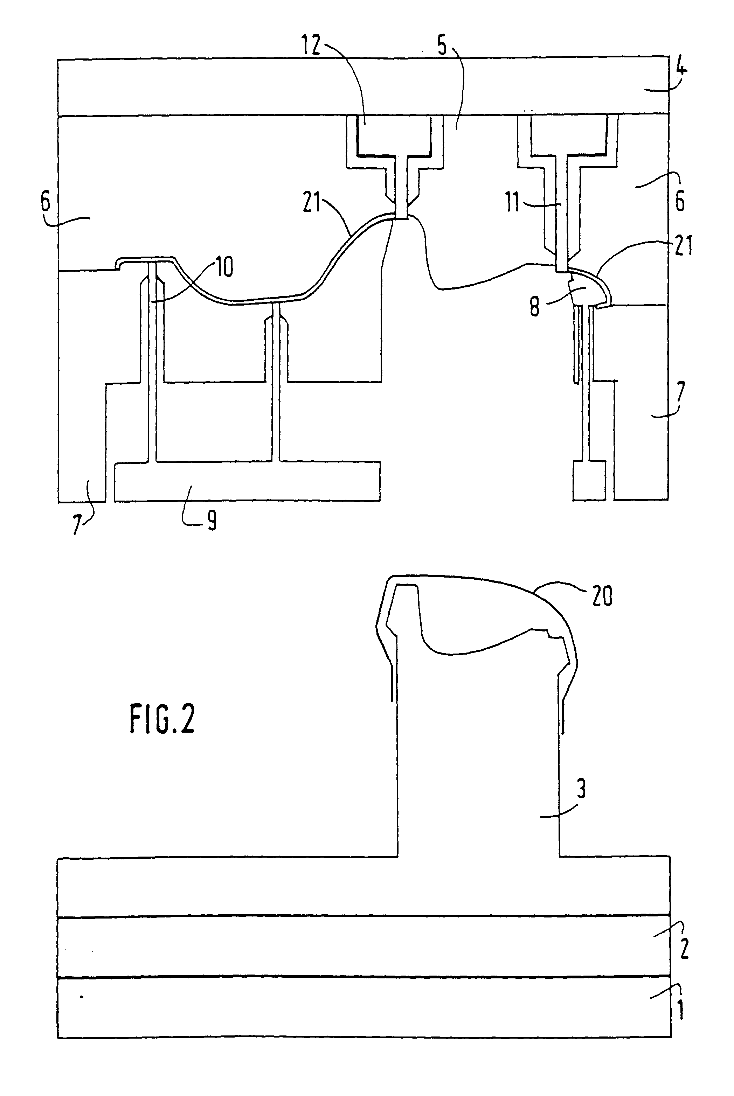

Comme montré à la figure 2, les éjecteurs 10 sont alors rentrés et le plan de joint principal est fermé en ramenant le pourtour de l'empreinte 7 en butée sur le pourtour de l'empreinte 6.

Dans l'étape représentée à la figure 3, le plan de joint auxiliaire est fermé, ce qui a pour effet de complètement fermer le moule. Ceci est réalisé en déplaçant l'ensemble des parties mobiles en direction de la partie fixe jusqu'à ce qu'elles viennent en butée l'une contre l'autre. C'est au cours de cette étape que la feuille de décor 20 est formée, si cela n'a pas été fait préalablement au cours d'une étape indépendante.

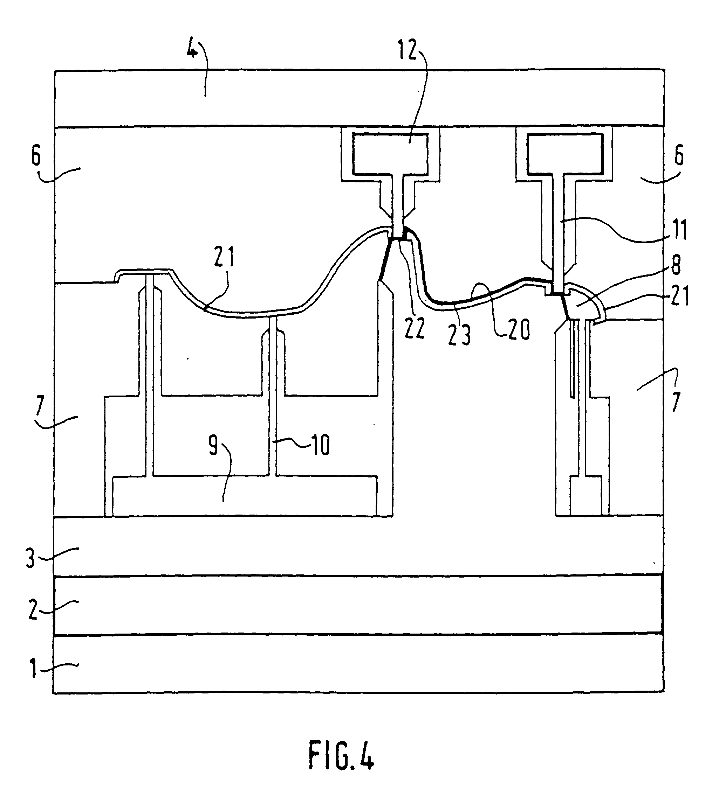

A la figure 4, la lunette 11 est tout d'abord sortie. Cette opération étant effectuée, les pourtours de butée des empreintes 6 et 7, les surfaces en vis-à-vis des empreintes 6 et 7 avec le noyau 8 de cette dernière, et la lunette 11 délimitent un volume d'injection 21 correspondant à la partie périphérique du panneau. Un autre volume d'injection 23 est délimité par les surfaces en vis-à-vis de la feuille 20 et de l'empreinte 3, et par la lunette 11.

Simultanément, la lisière 22 de la feuille 20 est pincée entre l'empreinte fixe 3 de médaillon et le bord libre de la lunette 11. De la matière plastique est alors injectée dans le volume 23.

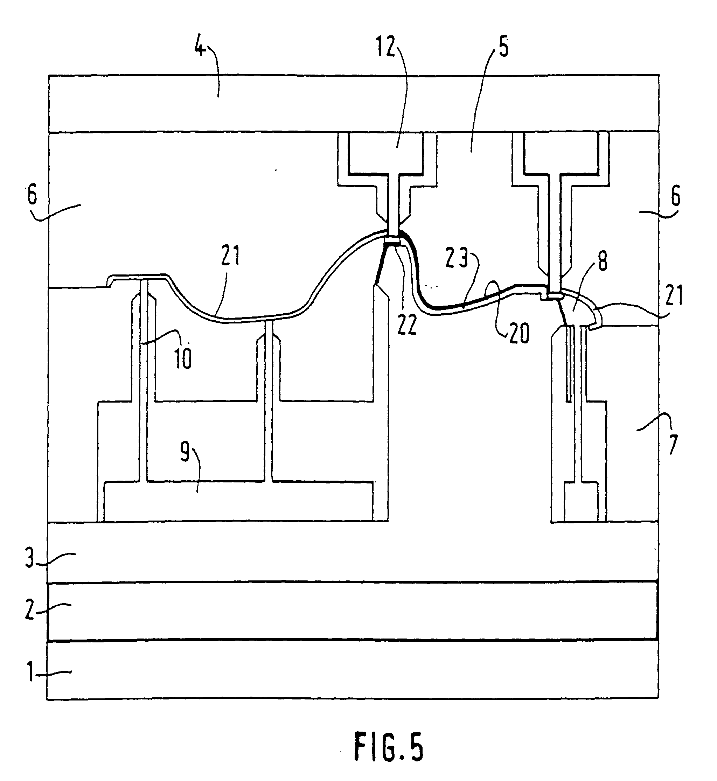

A la figure 5, la lunette est à nouveau rentrée et de la matière plastique est ensuite injectée dans le volume 21. Cette matière plastique vient donc également remplir l'espace laissé libre par la lunette 11, de sorte que, dans le panneau fini, le passage se fera sans transition de niveau entre la matière plastique de la partie périphérique du panneau et la feuille de décor 20.

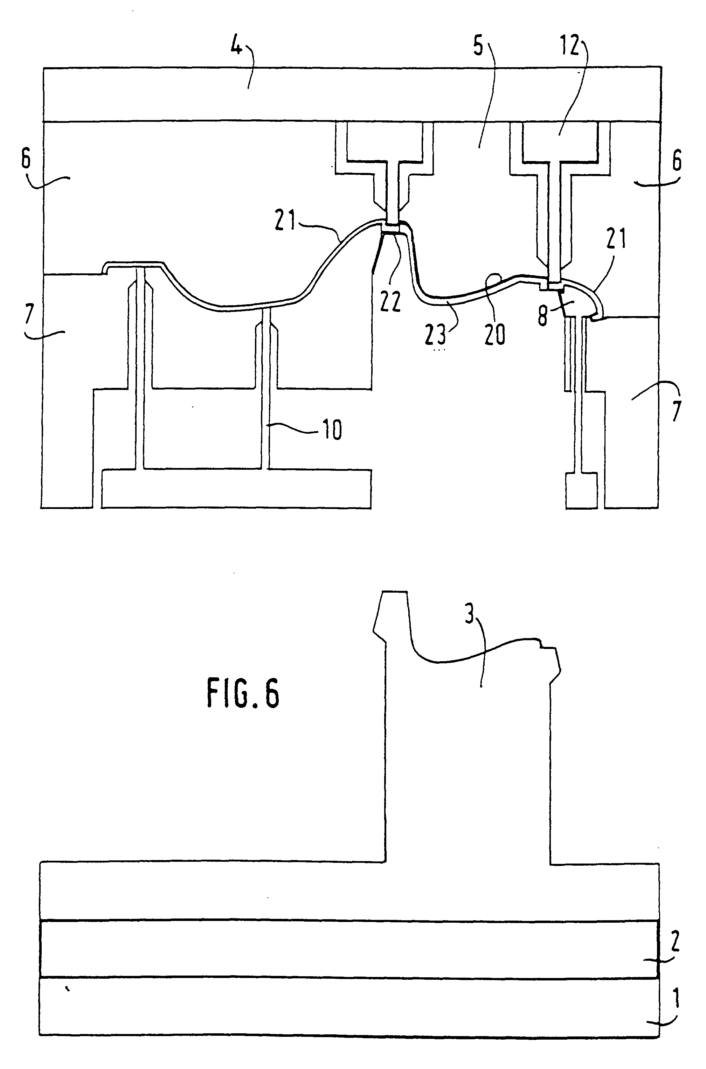

Dans l'étape de la figure 6, le plan de joint auxiliaire est de nouveau ouvert.

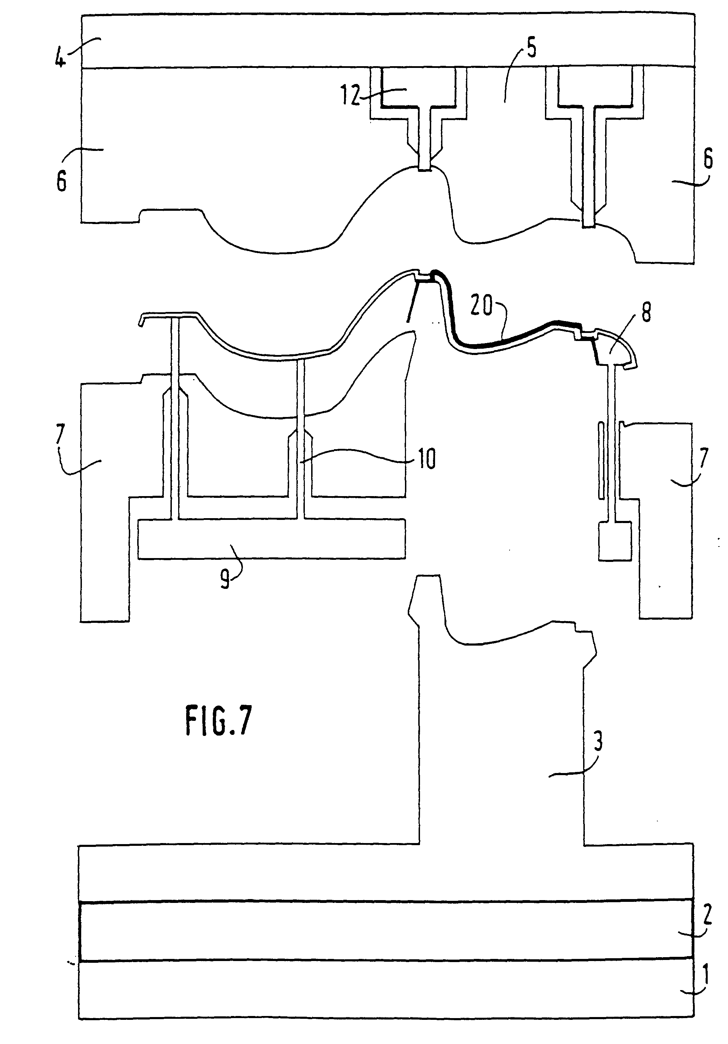

Enfin, dans la figure 7, le plan de joint principal est également ouvert, et les éjecteurs 10 sont actionnés, provoquant ainsi le démoulage du panneau. Le dispositif est revenu à sa position d'origine où une nouvelle feuille de décor peut être mise en place pour la fabrication du panneau suivant.

Dans le mode de réalisation de la figure 9, la lunette 11 comporte des encoches espacées 30 formées le long de son bord, du côté tourné vers le médaillon. Lors de l'injection de la matière plastique dans le volume 23 (figure 4), la feuille de décor 20 est traversée aux emplacements de ces encoches, où même éclate sous l'action la pression si elle est suffisamment étanche à cette matière plastique.

Il en résulte, lorsque la cavité 21 est injectée, un meilleur accrochage du médaillon sur la partie périphérique de la pièce.

En variante, les encoches pourraient être formées en un autre emplacement de la zone où les cavités d'injection 21 et 23 sont en vis-à-vis de part et d'autre de la feuille de décor 20, par exemple dans la partie supérieure 31 de la partie 6 du moule, faisant face au bord de la lunette 11.

## Revendications

1. Procédé d'inclusion d'un décor en feuille, notamment textile, en médaillon à la surface d'une pièce en matière plastique, comprenant les étapes consistant :
- à utiliser un moule en au moins deux parties, dont une partie au moins est constituée d'au moins deux éléments, au moins un élément (5) correspondant au médaillon et au moins un autre élément (6) correspondant à la périphérie de la pièce, autour du médaillon ;
- à amener la feuille de décor (20) sur l'élément correspondant au médaillon et à fermer le moule ;
- à définir, dans la cavité du moule, le volume (23) situé sous la feuille de décor du volume (21) périphérique en utilisant un moule dont la partie comprenant lesdits éléments comprend au moins un troisième élément (11), annulaire et entourant l'élément correspondant au médaillon, et susceptible de venir s'appliquer sur l'autre partie du moule ;
- à pincer, en fermant le moule, la lisière de la feuille de décor, entre l'autre partie du moule et ledit troisième élément ;
- à injecter de la matière plastique successivement dans les volumes périphérique (21) et situé sous la feuille de décor (23) ; le volume situé sous la feuille de décor étant séparé par la feuille de décor (20) du volume périphérique;
- à éjecter la pièce obtenue,
le troisième élément (11) étant agencé pour, lors de la fermeture du moule, isoler le volume (23) situé sous la feuille de décor du volume (21) périphérique.

2. Procédé selon la revendication 1, dans lequel on injecte la matière plastique en premier lieu dans le volume situé sous la feuille de décor.

3. Moule pour la fabrication d'une pièce en matière plastique comportant en médaillon, à sa surface, au moins un insert de décor en feuille, notamment textile, comprenant au moins deux parties délimitant entre elles une cavité d'injection, une première partie comprenant au moins deux éléments, au moins un (5) de ces éléments correspondant au médaillon et au moins un autre élément (6) correspondant à la périphérie de la pièce, autour du médaillon, le moule comprenant en outre des moyens d'étanchéification (11)-isolant dans ladite cavité d'injection, un premier volume d'injection (23) situé en regard de l'élément correspondant au médaillon, d'un deuxième volume d'injection (21) situé en regard de l'élément correspondant à la périphérie de la pièce, lesdits éléments correspondant respectivement au médaillon et à la périphérie de la pièce sont solidaires, la deuxième partie du moule supportant une empreinte (3) de médaillon vis-à-vis de l'élément correspondant au médaillon, et une empreinte (7,8) de partie périphérique étant elle-même montée indépendamment entre ladite première partie et ladite deuxième partie.

4. Moule selon la revendication 3, dont ladite première partie comprend au moins un troisième élément (11), annulaire et entourant l'élément correspondant au médaillon, et susceptible de venir s'appliquer sur la deuxième partie du moule pour isoler ledit premier volume d'injection dudit deuxième volume d'injection.

5. Moule selon la revendication 4, dans lequel ledit troisième élément est agencé pour coulisser entre l'élément correspondant au médaillon et l'élément correspondant à la partie périphérique du moule.

6. Moule selon l'une quelconque des revendications 3 à 5, dont l'une au moins des parties comporte des encoches espacées formées dans la zone où les deux volumes d'injection sont en vis-à-vis de part et d'autre de la feuille de décor.

7. Moule selon la revendication 6, dans lequel la distance entre lesdites encoches est inférieure à environ 1 mm pour un décor en feuille en film plastique, comprise entre environ 1 et 3 mm pour un décor en feuille en textile à structure serrée, et comprise entre environ 3 et 5 mm pour un décor en feuille à structure lâche.

8. Pièce en matière plastique réalisée d'une seule pièce comportant, en médaillon, au moins un décor en feuille (20), notamment textile, ledit décor étant inclus par un procédé selon la revendication 1 ou 2, dans laquelle la feuille de décor traverse la pièce à la périphérie du médaillon, avec une partie de la matière plastique moulée généralement sous le médaillon et une partie de la matière plastique moulée généralement à la périphérie du médaillon, la partie de la matière plastique moulée généralement sous le médaillon étant séparée par la feuille de décor de la partie de la matière plastique moulée généralement à la périphérie, l'unité de la pièce étant obtenue par adhérence sur cette feuille de la matière injectée de ses deux côtés.

9. Pièce en matière plastique réalisée d'une seule pièce comportant, en médaillon, au moins un décor en feuille (20), notamment textile, dans laquelle la feuille de décor traverse la pièce à la périphérie du médaillon, avec une partie de la matière plastique moulée généralement sous le médaillon et une partie de la matière plastique moulée généralement à la périphérie du médaillon, la matière plastique formant la périphérie de la pièce et la matière plastique formant le support de la feuille de décor se rejoignent dans l'épaisseur de la feuille de décor.

10. Pièce en matière plastique selon la revendication 9, dans laquelle la matière plastique formant la périphérie de la pièce et la matière plastique formant le support de la feuille de décor se rejoignent sensiblement au milieu de l'épaisseur de la feuille de décor.

## Claims

1. A method for including a decoration in sheet form, in particular textile, in a medallion on the surface of a piece of plastics material, comprising the steps consisting in:
- using a mould in at least two parts, at least one part of which consists of at least two elements, at least one element (5) corresponding to the medallion and at least one other element (6) corresponding to the periphery of the piece, around the medallion;
- bringing the decorative sheet (20) onto the element corresponding to the medallion and closing the mould;
- defining, in the mould cavity, the volume (23) situated under the decorative sheet from the peripheral volume (21) using a mould on which the part comprising the said elements comprises at least one third element (11), annular and surrounding the element corresponding to the medallion, and able to be applied against the other part of the mould;
- by closing the mould, gripping the edge of the decorative sheet between the other part of the mould and the said third element;
- injecting plastics material successively into the peripheral volume (21) and the volume (23) situated under the decorative sheet, the volume situated under the decorative sheet being separated by the decorative sheet (20) from the peripheral volume; and
- ejecting the piece obtained,
the third element (11) being arranged so as, when the mould is closed, to isolate the volume (23) situated under the decorative sheet from the peripheral volume (21).

2. A method according to Claim 1, in which the plastics material is first injected into the volume situated under the decorative sheet.

3. A mould for manufacturing a piece made from plastics material having, in medallion form, on its surface, at least one decorative insert in sheet form, in particular textile, comprising at least two parts delimiting between them an injection cavity, a first part comprising at least two elements, at least one (5) of these elements corresponding to the medallion and at least one other element (6) corresponding to the periphery of the piece around the medallion, the mould also comprises sealing means (11) isolating, in the said injection cavity, a first injection volume (23) situated opposite the element corresponding to the medallion, from a second injection volume (21) situated opposite the element corresponding to the periphery of the piece, the said elements corresponding respectively to the medallion and to the periphery of the piece are integral, the second part of the mould supporting a medallion impression (3) facing the element corresponding to the medallion, and a peripheral part impression (7, 8) itself being mounted independently between the said first part and the said second part.

4. A mould according to Claim 3, on which the said first part comprises at least a third element (11), annular and surrounding the element corresponding to the medallion, and able to be applied to the second part of the mould in order to isolate the said first injection volume from the said second injection volume.

5. A mould according to Claim 4, in which the said third element is arranged to slide between the element corresponding to the medallion and the element corresponding to the peripheral part of the mould.

6. A mould according to any one of Claims 3 to 5, on which at least one of the parts has spaced-apart notches formed in the area where the two injection volumes are facing each other on each side of the decorative sheet.

7. A mould according to Claim 6, in which the distance between the said notches is less than approximately 1 mm for a decorative sheet of plastic film, between approximately 1 and 3 mm for a decorative sheet made from textile with a close structure, and between approximately 3 and 5 mm for a decorative sheet with a loose structure.

8. A piece of plastic material produced in a single piece comprising, in medallion form, at least one decorative sheet (20), in particular textile, the said decoration being included by a method according to Claim 1 or 2 by means of which the decorative sheet passes through the piece at the periphery of the medallion, with some of the plastics material moulded generally under the medallion and some of the plastics material moulded generally at the periphery of the medallion, the part of the plastics material moulded generally under the medallion being separated by the decorative sheet from the part of the plastics material moulded generally at the peripheral, the unity of the piece being obtained by the adhesion to this sheet of injected material on both sides.

9. A piece made from plastics material produced in a single piece having, in medallion form, at least one decorative sheet (20), in particular textile, in which the decorative sheet passes through the piece at the periphery of the medallion, with some of the plastics material moulded generally under the medallion and some of the plastics material moulded generally at the periphery of the medallion, the plastics material forming the periphery of the piece and the plastics material forming the support for the decorative sheet being joined in the thickness of the decorative sheet.

10. A piece made from plastics material according to Claim 9, in which the plastics material forming the periphery of the piece and the plastics material forming the support for the decorative sheet are joined substantially at the middle of the thickness of the decorative sheet.

## Patentansprüche

1. Verfahren zur Einbettung einer Dekorfolie, insbesondere aus Textil, in Form eines Einschlusses an der Oberfläche eines Werkstücks aus Kunststoff, mit den Schritten:
- Verwendung eines mindestens zweiteiligen Spritzwerkzeugs, wobei mindestens ein Werkzeugteil aus mindestens zwei Elementen besteht, wobei mindestens ein Element (5) dem Einschluss und mindestens ein anderes Element (6) der Werkstückaußenkontur um den Einschluss herum entspricht;
- Aufbringen der Dekorfolie (20) auf das dem Einschluss entsprechende Element und Schließen des Spritzwerkzeugs;
- Abgrenzung des unter der Dekorfolie befindlichen Hohlraumes (23) vom umlaufenden Hohlraum (21) im Werkzeuginnenraum unter Einsatz eines Spritzwerkzeuges, bei dem der mit den Elementen versehende Werkzeugteil mindestens ein drittes ringförmiges Element (11) enthält, welches das dem Einschluss entsprechende Element umgibt, und welches gegen den anderen Werkzeugteil gedrückt werden kann;
- Einklemmen der Dekorfolienkante zwischen dem dritten Element und dem anderen Werkzeugteil beim Schließen des Werkzeugs;
- aufeinanderfolgendes Einspritzen von Kunststoff in den umlaufenden Hohlraum (21) und den unter der Dekorfolie liegenden Hohlraum (23), wobei der unter der Dekorfolie liegende Hohlraum durch die Dekorfolie (20) vom umlaufenden Hohlraum abgegrenzt ist;
- Auswerfen des hergestellten Werkstücks,
wobei das dritte Element (11) so angeordnet ist, dass beim Schließen des Spritzwerkzeuges der unter der Dekorfolie liegende Hohlraum (23) vom umlaufenden Hohlraum (21) getrennt wird.

2. Verfahren nach Anspruch 1, wobei der Kunststoff zuerst in den unter der Dekorfolie liegenden Hohlraum eingespritzt wird.

3. Spritzwerkzeug zur Herstellung eines Werkstückes aus Kunststoff mit an seiner Oberfläche mindestens einem einschlußförmigen Dekorfolieneinsatz, insbesondere aus Textil, wobei das Spritzwerkzeug aus mindestens zwei Werkzeugteilen besteht, welche zusammen einen Einspritzraum begrenzen, wobei ein erster Werkzeugteil aus mindestens zwei Elementen gebildet wird, und wobei mindestens eines (5) dieser Elemente dem Einschluss und mindestens ein anderes Element (6) der Werkstückaußenkontur um den Einschluss herum entspricht, wobei das Spritzwerkzeug weiterhin Abdichtmittel (11) aufweist, welche in dem Einspritzraum einen dem dem Einschluss entsprechenden Element gegenüberliegenden ersten Einspritzhohlraum (23) von einem dem der Werkstückaußenkontur entsprechenden Element gegenüberliegenden zweiten Einspritzhohlraum (21) abgrenzt, wobei diese jeweils dem Einschluss und der Werkstückaußenkontur entsprechenden zwei Elemente fest miteinander verbunden sind, wobei der zweite Werkzeugteil eine dem dem Einschluss entsprechenden Element gegenüberliegende Einschlußmatrize (3) trägt, und wobei eine Außenkonturmatrize (7, 8) frei zwischen dem ersten Werkzeugteil und dem zweiten Werkzeugteil angeordnet ist.

4. Spritzwerkzeug nach Anspruch 3, wobei der erste Werkzeugteil mindestens ein drittes ringförmiges Element (11) aufweist, welches das dem Einschluss entsprechende Element umgibt, und welches gegen den zweiten Werkzeugteil gedrückt werden kann, um den ersten Einspritzhohlraum vom zweiten Einspritzhohlraum abzugrenzen.

5. Spritzwerkzeug nach Anspruch 4, wobei das dritte Element verschiebbar zwischen dem dem Einschluss entsprechende Element und dem der Außenkontur entsprechenden Element des Spritzwerkzeuges angeordnet ist.

6. Spritzwerkzeug nach einem der Ansprüche 3 bis 5, wobei mindestens eines der Werkzeugteile mehrere beabstandeten Einkerbungen aufweist, welche in dem jenigen Bereich, in dem sich die zwei Einspritzhohlräume beidseitig der Dekorfolie gegenüberliegen, ausgebildet werden.

7. Spritzwerkzeug nach Anspruch 6, wobei der Abstand zwischen den Einkerbungen bei einer Kunststoffdekorfolie weniger als etwa 1 mm beträgt, bei einer Textildekorfolie mit dichter Struktur etwa zwischen 1 mm und 3 mm beträgt, und bei einer Textildekorfolie mit lockerer Struktur etwa zwischen 3 mm und 5 mm beträgt.

8. Einteiliges Werkstück aus Kunststoff mit mindestens einer einschlußförmigen Dekorfolie (20), insbesondere aus Textil, die mittels eines Verfahrens nach Anspruch 1 oder 2 eingebettet wird, wobei die Dekorfolie durch das Werkstück an der Einschlußkontur hindurchgeht, wobei ein Kunststoffteil allgemein unter den Einschluss und ein Kunststoffteil allgemein an der Einschlußkontur gegossen wird, wobei der allgemein unter den Einschluss gegossene Kunststoffteil durch die Dekorfolie von dem allgemein an der Werkstückaußenkontur gegossenen Kunststoffteil getrennt ist, und wobei das gesamte Werkstück unter Haftverschluß des beidseitig der Folie eingespritzten Materials hergestellt wird.

9. Einteiliges Werkstück aus Kunststoff mit einer einschlußförmigen Dekorfolie (20), insbesondere aus Textil, wobei die Dekorfolie durch das Werkstück an der Einschlußkontur hindurchgeht, wobei ein Kunststoffteil allgemein unter den Einschluss und ein Kunststoffteil allgemein an der Einschlußkontur gegossen wird, wobei als Einschlußkontur geformte Kunststoffteil und der als Dekorfolienträger geformte Kunststoffteil in der Dekorfoliendicke zusammenlaufen.

10. Werkstück aus Kunststoff nach Anspruch 9, wobei der als Werkstückaußenkontur geformte Kunststoffteil und der als Dekorfolienträger geformte Kunststoffteil wesentlich in der Mitte der Dekorfoliendicke zusammenlaufen.
